# EUROPÄISCHE PATENTSCHRIFT

(11) **EP 0 718 077 B1**
(45) Veröffentlichungstag und Bekanntmachung des Hinweises auf die Patenterteilung: **07.05.2003**
(21) Anmeldenummer: 95119869.6
(22) Anmeldetag: 15.12.1995
(51) Int. Cl.: B26F 1/24, B29C 51/32, B65D 81/26

(54) **Verfahren und Vorrichtungen zum Perforieren von glatten, geschlossenzelligen Oberflächen offenzelliger Kunststoff-Schaumfolien**
Method and devices for perforating smooth, closed cell surfaces of open celled foamed sheets
Procédé et dispositifs pour perforer des surfaces lisses à cellules fermées de feuilles en mousse à cellules ouvertes

(30) Priorität: 23.12.1994 DE 4446442; 02.06.1995 DE 19520294; 02.06.1995 DE 19520293
(43) Veröffentlichungstag der Anmeldung: 26.06.1996
(73) Patentinhaber: Depron B.V., 6002 SM Weert (NL)
(72) Erfinder: Joppen, Henk, NL-5653 Eindhoven (NL); Daniels, Paul, NL-6004 BL Weert (NL); Buijsch, Jan op den, NL-6024 RC Budel-Dorplein (NL)
(74) Vertreter: Zounek, Nikolai, Dipl.-Ing.

(56) Entgegenhaltungen:
- DE-A- 1 629 155
- DE-A- 3 445 656
- DE-A- 4 120 319
- DE-A- 4 234 632
- DE-A- 4 423 283
- FR-A- 1 596 691
- FR-A- 2 041 488
- US-A- 2 611 434
- US-A- 3 974 722
- US-A- 4 552 600
- US-A- 4 980 100
- US-A- 5 207 733
- PATENT ABSTRACTS OF JAPAN vol. 010 no. 040 (M-454) ,18.Februar 1986 & JP-A-60 192615 (KANEGAFUCHI KAGAKU KOGYO KK) 1.Oktober 1985,

## Beschreibung

Die Erfindung betrifft Verfahren gemäß den Oberbegriffen der Ansprüche 1 und 4 zum Perforieren von glatten, geschlossenen Oberflächen offenzelliger Kunststoff-Schaumfolien und Vorrichtungen zum Perforieren von glatten, geschlossenen Oberflächen von Erzeugnissen aus offenzelligen Kunststoff-Schaumfolien, mit einem Werkzeug, das mit Nadeln in Matrixanordnung ausgestattet ist, deren Nadelspitzen während eines Perforationsvorgangs von der Oberfläche des Werkszeugs so weit vorstehen, dass sie die Oberfläche des Erzeugnisses durchlöchern (Ansprüche 7 und 23).

Derartige Kunststoff-Schaumfolien mit offenzelligem Kern werden beispielsweise zu Produkten wie Schalen oder Behältern thermogeformt.

Für die Herstellung von Verpackungsmaterial, wie beispielsweise Verpackungsschalen, werden offenzellige Kunststof-Schaumfolien eingesetzt, die im Gegensatz zu Kunststoff-Schaumfolien mit geschlossenen Zellen in der Lage sind, Flüssigkeiten aufzunehmen.

Kunststoff-Schaumfolien werden im allgemeinen in der Weise hergestellt, dass ein thermoplastischer Kunststoff zusammen mit einem Treibmittel, insbesondere einem Treibgas, aus einer ring- oder breitschlitzförmigen oder Koextrusionsdüse extrudiert wird. Kurz nach dem Verlassen derExtrusionsdüse expandiert das im Kunststoff fein verteilte Treibmittel, so dass sich im Kunststoffschaumkörper feinste Bläschen bilden. Je nach Verfahrensbedingungen hinsichtlich der Temperatur und der Extrusionsgeschwindigkeit werden mehr oder weniger große Bläschen erhalten. Dementsprechend enthält die so hergestellte Kunststoff-Schaumfolie dichtgepackte, geschlossene, gasgefüllte Zellen, wobei das in den Zellen eingeschlossene Gas im allgemeinen Luft und/oder Reste des Treibmittels sind. Derartige geschlossenzellige Kunststoff-Schaumfolien besitzen ausgezeichnete Isoliereigenschaften, die im wesentlichen auf den dichtgepackten, geschlossenen, gasgefüllten Zellen beruhen.

Völlig anders verhält sich eine Kunststoff-Schaumfolie, in der die Zellen nicht geschlossen, sondern geöffnet, d.h. durchgängig, sind. Eine solche Kunststoff-Schaumfolie kann beispielsweise Flüssigkeiten absorbieren und speichern, ähnlich wie ein Schwamm. Derartige offenzellige Kunststoff-Schaumfolien werden im allgemeinen mittels einer Tandem-Extrusionsanlage hergestellt. Diese Kunststoff-Schaumfolien sind mit einer dünnen, geschlossenzelligen Haut an der Innen- und Außenseite ausgestattet. Diese Haut ist unbedingt erforderlich, um eine gute thermische Ausformung der Kunststoff-Schaumfolie zu einem Schalenprodukt zu garantieren. Damit Flüssigkeit von den produzierten Schalenprodukten aufgenommen werden kann, ist es erforderlich, die Oberflächenhaut an bestimmten Stellen zu perforieren.

Die Kunststoffe der Schaumfolie können aus der Gruppe der Polyolefine, wie Polyethylen (HDPE, LPE, LLTP), chloriertes Polyethylen, Polypropylen (PP), Polypropylencopolymere (PPC), Ethylenvinylacetatcopolymer(EVA), halogenierte Polyolefine; aus der Gruppe der Styrolpolymere, wie Polystyrol (PS), Polystyrolcopolymere (PSC), Acrylonitrilbutadienstyrolcopolymere (ABS), Styrolmaleinsäureanhydrid, schlagfeste Polystyrole (SPS); aus der Gruppe der Polyester, wie Polyethylenterephthalat (PET), Polyethylenglykolterephthalat (PETP), Polybutylenterephthalat (PPT); aus Ethylenpropylenerpolymerisat, Polyvinylchlorid (PVC), und/oder Polyphenylenoxid ausgewählt werden.

Ferner kann der Kunststoff aus Copolymeren oder Blends thermoplastischer Polymere, aus Polymeren, Copolymeren oder Blends thermoplastischer Polymere und/oder Copolymeren bestehen.

Aus dem Dokument FR-A 2 041 488 ist eine (gemäß den Oberbegriffen des Ansprüche 1 und 4) perforierte Verpackungsschale für Nahrungsmittel bekannt, die aus einer Kunststoff-Schaumfolie besteht, die im Inneren offene Zellen aufweist. Durch Perforieren einer der beiden Oberflächen dieser Verpackungsschale wird ein Zugang zu den offenen Zellen im Inneren der Kunststoff-Schaumfolie erhalten. Die Verpackungsschale besteht aus einer extrudierten Kunststoff-Schaumfolie und weist einen Boden mit schrägen Seitenwänden auf, wobei der Boden perforiert ist.

Die DE-A34 45 656 offenbart (gemäß den Oberbegriffen der Ansprüche 7 and 23) ein Blasform-und ein Wärmeumformverfahren. Beim Blasformverfahren wird ein thermoplastischer Schlauch aufgeblasen und gegen Formhälften angedrückt und zu einem Hohlkörper geformt. Beim Wärmeumformverfahren werden zwei Kunststoffplatten, die beispielsweise aus unterschiedlichen Materialien bestehen können, gestaltsmäßig umgeformtund gegen Formhälften angedrückt, die diese beiden Kunststoffplatten zu einem Hohlkörper zusammenfügen. Während der Abkühlphase des Hohlkörpers werden Löcher in einer Schaumstoffschicht aus offenzelligem luftdurchlässigem Schaumkunststoff und einer Stabilisierungsschicht gestochen, die aus thermoplastischem Kompaktmaterial besteht. Die beiden Kunststoffplatten können auch durch Vakuum gegen die Formhälften angedrücktwerden. Die Nadeln sind in einer gemeinsamen Grundplatte verankert, die über eine zentrale Stange gesteuert bzw. bewegt wird. Die Führungskanäle dieser Nadeln sind nicht mit Vakuum beaufschlagbar.

Aufgabe der Erfindung ist es, Verfahren und Vorrichtungen zu schaffen, mit denen eine sichere und schnelle Perforation der glatten, geschlossenen Oberflächenhaut eines aus einer Kunststoff-Schaumfolie thermogeformten Produkts vorgenommen werden kann, um einen Zugang zu der offenzelligen Struktur der Kunststoff-Schaumfolie unterhalb der Oberfläche zu erhalten. Im Rahmen dieser Aufgabe soll auch dann eine sichere Perforation gewährleistet sein, wenn Dimensionsabweichungen in den Produkten infolge von Schrumpf und/oder Veränderungen in der Schlaglänge der Folie auftreten.

Diese Aufgabe wird bei dem Verfahren nach der Erfindung durch die Merkmale der Ansprüche 1 und 4 gelöst.

In Ausgestaltung des Verfahrens werden die Seitenwände und der Boden eines aus der Kunststoff-Schaumfolie geformten Erzeugnisses jeweils senkrecht zu den Oberflächen gleich/unterschiedlich tief perforiert. Dies geschieht in der Weise, dass die Nadeln mittels Druckluft aus einer Matrize zu Perforationsbeginn ausgefahren werden und dass am Perforationsende nach Abschalten der Druckluft, die Nadeln mittels Federdruck in die Matrize eingefahren werden.

Eine Vorrichtung zum Perforieren von glatten, geschlossenen Oberflächen von Erzeugnissen aus offenzelligen Kunststoff-Schaumfolien, mit einem Werkzeug, das mit Nadeln in Matrixanordnung ausgestattet ist, deren Nadelspitzen während eines Perforationsvorgangs von der Oberfläche des Werkzeugs soweit vorsteht, dass sie die Oberfläche des Erzeugnisses durchlöchern, ist derart ausgestaltet, dass die Nadeln beweglich in Vakuumkanälen einer Thermoformanlage angeordnet sind und dass zu einem Formblock für die Formgebung der Innenseite des Erzeugnisses ein komplementärer Formblock vorhanden ist (Anspruch 7).

In Ausgestaltung der Vorrichtung umfasst der Formblock eine Patrize, eine Kühlplatte, eine Vakuumplatte, bewegliche Nadeln, eine Nadelplatte, Federn für die Rückstellung der Nadelplatte, Membranen und eine Montageplatte, die durch Schrauben zusammengehalten sind.

Die weitere Ausgestaltung der Vorrichtung nach der Erfindung ergibt sich aus den Merkmalen der Patentansprüche 9 bis 22.

Eine weitere Vorrichtung zum Perforieren von glatten, geschlossenen Oberflächen von Erzeugnissen aus offenzelligen Kunststoff-Schaumfolien mit einem Werkzeug, das mit Nadeln in Matrixanordnung ausgestattet ist, deren Nadelspitzen während eines Perforationsvorgangs von der Oberfläche des Werkzeugs so weit vorstehen, dass sie die Oberfläche des Erzeugnisses durchlöchern, zeichnet sich dadurch aus, dass die Nadeln beweglich in Bohrungen in Formblöcken angeordnet sind, die Perforierblöcke aufweisen, die als Patrizen an den Innenseiten der Erzeugnisse anliegen und dass Matrizen, komplementär zu den Perforierblöcken ausgebildet oder eine plane Andruckplatte vorhanden sind, die jeweils an den Außenseiten der Erzeugnisse anliegen (Anspruch 23).

Die weitere Ausgestaltung dieser Vorrichtung ergibt sich aus den Merkmalen der Patentansprüche 24 bis 38.

Mit der Erfindung wird der Vorteil erzielt, dass beim Anheben der Perforierblöcke gegen die ausgeformten Produkte in der Kunststoff-Schaumfolie, die gegen die Unterseite der Andruckplatte anliegt, sich die Perforierblöcke in den ausgeformten Produkten selbst zentrieren, so dass auftretende kleine Abweichungen von einigen Millimetern, bedingt durch Schrumpf der Kunststoff-Schaumfolie und Veränderungen in der Schlaglänge der Folienbahn, kompensiert werden können.

Die Erfindung wird im folgenden anhand von zeichnerisch dargestellten Ausführungsbeispielen der Vorrichtung (Figuren 1 bis 3 und 7 bis 10) näher erläutert. Es zeigen:
- Fig. 1: in schematischer Schnittdarstellung eine Thermoformanlage, von der ein Formblock mit beweglichen Nadeln für die Perforation einer zu einer Schale geformten Kunststoff-Schaumfolie ausgestattet ist,
- Fig. 2: einen Schnitt durch eine Patrize und eine Kühlplatte als Teilelemente eines Formblocks mit beweglichen Nadeln der Vorrichtung nach der Erfindung,
- Fig. 3: einen Schnitt durch einen vollständigen Formblock der Vorrichtung nach der Erfindung,
- Fig. 4: schematisch eine Ansicht einer Patrize mit feststehenden Nadeln,
- Fig. 5: in schematischer Ansicht eine in der Thermoformanlage den Formblöcken nachgeordnete Patrize mit feststehenden Nadeln,
- Fig. 6: eine Nadelwalze mit feststehenden Nadeln und Gegendruckplatte zum Perforieren einer Kunststoff-Schaumfolie nach der Extrusion und vor der Thermoformung,
- Fig. 7: einen Querschnitt durch eine andere Ausführungsform eines Formblocks aus Grundplatte und Patrize,
- Fig. 8: einen Querschnitt eines in der Patrize nach Fig. 7 angeordneten Nadelkolbens,
- Fig. 9: eine schematische Ansicht einer anderen Ausführungsform einer Vorrichtung zum Perforieren von glatten, geschlossenen Oberflächen von Kunststoff-Schaumfolien mit offenzelligem Kern, und
- Fig. 10: einen Ausschnitt aus einem Formblock, bestehend aus einem Teil einer Grundplatte und einem Perforierblock der in Figur 9 gezeigten Vorrichtung.

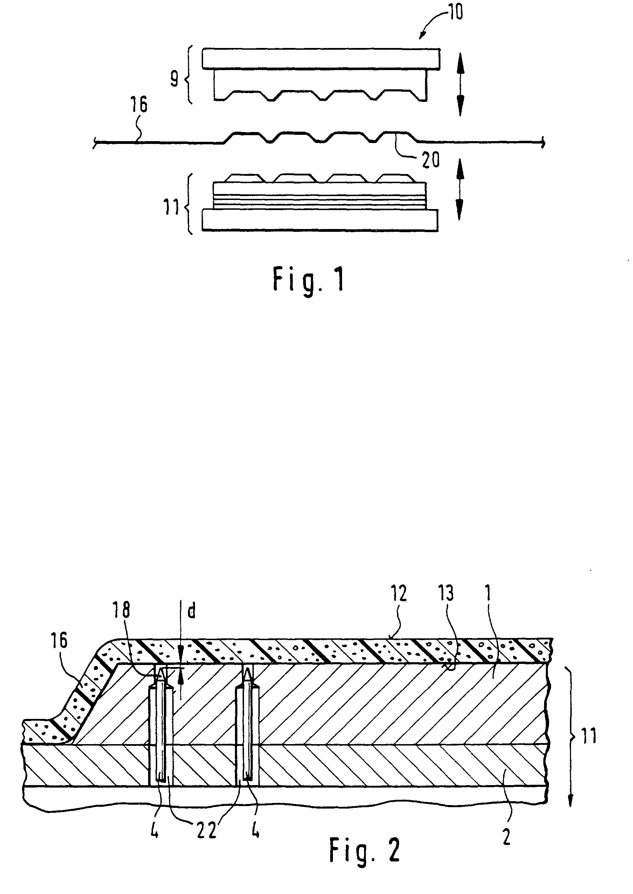

Figur 1 zeigt schematisch die Perforation einer Kunststoff-Schaumfolie 16 in einer Thermoformanlage 10, die aus zwei Formblöcken 9 und 11 besteht. Die beiden Formblöcke 9 und 11 sind senkrecht zu der Transportrichtung der Kunststoff-Schaumfolie 16 hinund herbewegbar. Der obere Formblock 9 enthält eine Matrize, wie nachstehend noch näher beschrieben werden wird, mit der die Außenseite des aus der Kunststoff-Schaumfolie hergestellten Produkts, beispielsweise eine Schale 20, geformt wird. Der untere Formblock 11 enthält u.a. eine Patrize, mit der die Innenseite des Produkts geformt wird. Die Querschnitte der Matrize und der Patrize sind zueinander komplementär ausgebildet.

Zum Ausformen der Kunststoff-Schaumfolie 16 in der Thermoformanlage 10 wird zunächst die Kunststoff-Schaumfolie in einem nicht gezeigten Infrarot-Wärmeofen auf eine bestimmte Temperatur aufgeheizt. Danach gelangt der aufgeheizte Abschnitt der Kunststoff-Schaumfolie 16 in die Thermoformanlage 10, deren Formblöcke 9 und 11 geschlossen werden, was bedeutet, daß die Matrize und Patrize sich bis auf einen Abstand von ca. 5 mm aneinander angenähert haben. Die Kunststoff-Schaumfolie wird gleichzeitig beidseitig tiefgezogen, mittels doppelseitig wirkendem Vakuum, mit dem die Formblöcke 9 und 11 bzw. die Matrize und Patrize beaufschlagt werden. Sowohl die Matrize als auch die Patrize werden mittels Wasser oder einer sonstigen Flüssigkeit gekühlt, d.h. auf einer bestimmten Temperatur gehalten, die erforderlich ist, um die Festigung des aus der Kunststoff-Schaumfolie geformten Produkts zu gewährleisten. Durch die Festigung des Produkts wird die Beibehaltung der Form sichergestellt. Nach Ablauf einer bestimmten Vakuum- und Kühlzeit in den noch geschlossenen Formblöcken 9 und 11 der Thermoformanlage 10 erfolgt die Perforation der glatten, geschlossenen Oberflächenhaut der im Inneren offenzelligen Kunststoff-Schaumfolie 16 bzw. der daraus geformten Schale 20. Hierzu sind bewegliche Nadeln 4 in dem unteren Formblock 11 vorgesehen, die mittels Druckluft ausgefahren werden.

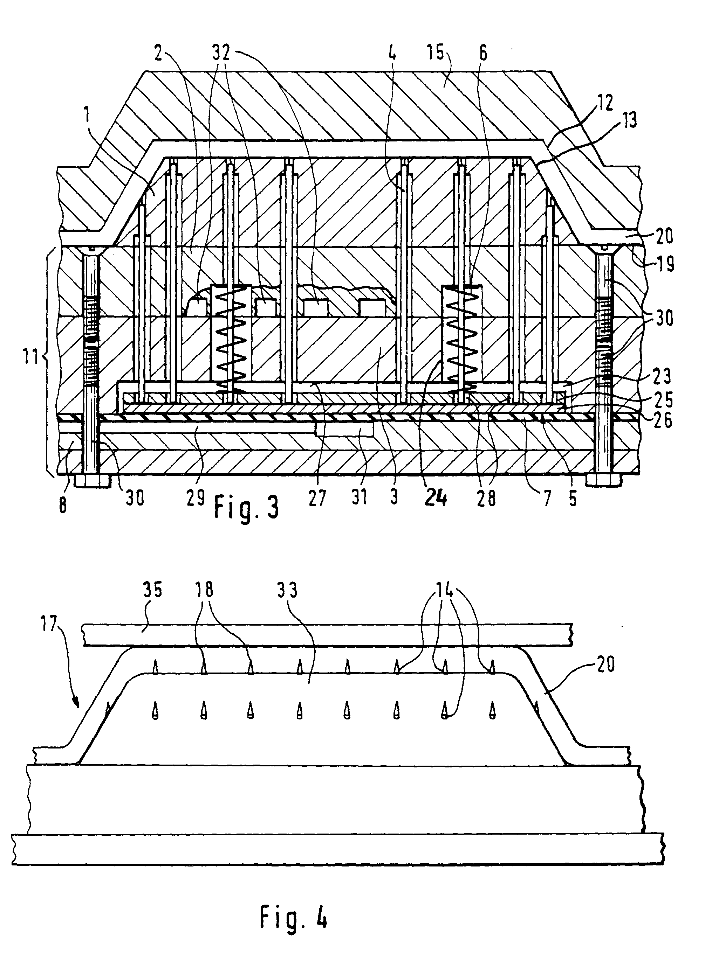

Wie aus dem Teilschnitt des Formblocks 11 in Figur 2 hervorgeht, sind zum Perforieren der tiefgezogenen Kunststoff-Schaumfolie 16 bzw. der daraus geformten Schalen 20 die beweglichen Nadeln 4 so montiert, daß sie in der neutralen Position mit ihren Nadelspitzen 18 entweder mit der Oberfläche der Patrize 1 abschließen oder in einem Abstand d von etwa 0,2 mm unterhalb der Patrizenoberfläche sich befinden. Der Durchmesser der Nadeln 4 liegt im Bereich von 1,0 bis 2,0 mm, und jede Nadel 4 ist in einer Führung 22 angeordnet, die sich durch die Patrize 1, die Kühlplatte 2 sowie eine in Figur 3 gezeigte, darunter befindliche Vakuumplatte 3 erstreckt.

In Figur 2 ist die geformte Kunststoff-Schaumfolie 16 angedeutet, die mit ihrer Innenseite 13 an der Patrize 1 anliegt, während ihre Außenseite 12 mit der nicht gezeigten Matrize in Kontakt ist.

Wie aus Figur 3 ersichtlich ist, besteht der vollständige Formblock 11 für die Innenseite der geformten Kunststoff-Schaumfolie aus der Patrize 1, der Kühlplatte 2, der Vakuumplatte 3, beweglichen Nadeln 4, einer Nadelplatte 5, Federn 6 für die Rückstellung der Nadelplatte, Membranen 7 und einer Montageplatte 8, wobei sämtliche Teile durch Schrauben 30 zusammengehalten sind. Die Patrize 1 ist jeweils entsprechend dem herzustellenden Produkt geformt, d.h. mit anderen Worten, für jedes Produkt gibt es eine eigene Patrize 1. Wie schon bei der Beschreibung von Figur 2 erwähnt wurde, ist die Patrize 1 mit Führungen 22 für die beweglichen Nadeln 4 ausgestattet. Diese Führungen 22 werden einerseits als Führungen für die Nadeln 4 benutzt und andererseits als Vakuumkanäle, die während der Verformung der Kunststoff-Schaumfolie 16 unter Vakuum gesetzt werden. Diese kombinierte Nutzung der Führungen 22 ist sehr platzsparend und konstruktiv einfach, da wesentlich weniger Löcher in die Patrize 1 gebohrt werden müssen als bei einer Trennung von Führungen und Vakuumkanälen. Die Führungen haben ein vorgegebenes Übermaß, im Vergleich zum Nadeldurchmesser, so betragen beispielsweise die Nadeldurchmesser 1,0 bis 2,0 mm und die Durchmesser der Führungen 22 1,4 bis 2,4 mm. Zum schnellen Aufbau des Vakuums sind die Führungen 22 innerhalb der Kühlplatte 2 und der Vakuumplatte 3 über eine bestimmte Länge zu Zylinderkammern 24 aufgebohrt, die einen Durchmesser von etwa 5 mm besitzen. Das Material für die Patrize 1 ist bevorzugt Aluminium, jedoch sind auch sonstige Metalle und Metallegierungen hierfür geeignet.

Der Formblock für die Außenseite 12 der Kunststoff-Schaumfolie bzw. der ausgeformten Schale 20 weist eine in Figur 3 schematisch angedeutete Matrize 15 auf, deren an der Außenseite 12 anliegende Fläche komplementär zu der an der Innenseite 13 anliegenden Patrize 1 ausgebildet ist. Die Formblöcke sind bis auf einen Abstand entsprechend der einstellbaren Wandstärke der Schale 20 aufeinander zu bewegbar, wobei die Wandstärke der Schale 20 im Bereich von 3,5 bis 6,5 mm liegt. Sowohl die Matrize als auch die Patrize sind jeweils auf einer Kühlplatte 2 montiert, von denen in Figur 3 nur die Kühlplatte der Patrize 1 gezeigt ist. Das Kühlmedium Wasser oder ein sonstiges Kühlmedium fließt durch die in die Unterseite der Kühlplatte 2 gefrästen Kühlkanäle 32, die durch die an die Unterseite der Kühlplatte 2 anliegende Vakuumplatte 3 zu geschlossenen Kühlkanälen werden. Das Material der Kühlplatte 2 ist bevorzugt Aluminium, jedoch sind auch andere Metalle und Metallegierungen hierfür geeignet.

In die Unterseite der Vakuumplatte 3 ist eine Kammer 23 eingefräst, die eine zwei Teilplatten 25, 26 umfassende Nadelplatte 5 aufnimmt. Die Führungen 22 für die beweglichen Nadeln 4 erstrecken sich von der Kammer 23 durch die Vakuumplatte 3, die Kühlplatte 2, bis zu der Außenseite der Patrize 1. Der Querschnitt der einzelnen Führung 22 verengt sich auf den Querschnitt der Nadeln 4 auf einer Länge von einigen Zehnteln Millimeter, beginnend unterhalb der Außenseite und endend auf der Außenseite der Patrize 1 bzw. des Formblocks 11.

Die Zylinderkammern 24 erstrecken sich von der Kammer 23 durch die Vakuumplatte 3 hindurch bis teilweise in die Kühlplatte 2 hinein. In den Zylinderkammern 24 sind die Federn 6 untergebracht, die die Nadeln 4 umschließen. Das eine Ende jeder Feder liegt gegen die Deckfläche der Zylinderkammer 24 und das andere Ende gegen die zugehörige Nadelplatte 5 unter Druck an.

Die Nadeln 4 sind mit ihren unteren Enden in der oberen Teilplatte 25 der Nadelplatte 5 verankert. Die obere Teilplatte 25 ist hierzu mit Löchern 28 ausgestattet, die ein Übermaß gegenüber den hindurchgeführten Nadeln 4 aufweisen, um ein reibungsloses Spiel während der Bewegungen der Nadeln in den Löchern sicherzustellen. Das Ausgangsmaterial für die Nadeln 4 sind sogenannte Auswerfstifte aus einer Nickel-Chrom-Legierung gemäß DIN 1530D oder DIN 9861. Diese Auswerfstifte werden auf die gewünschte Länge geschnitten und mit einer Spitze versehen, deren Öffnungswinkel zwischen 10 und 60° beträgt, insbesondere 30°. Weitere bevorzugte Öffnungswinkel α für die Nadeln 4 betragen 23° oder 27°. Die Nadeln 4 sind darüber hinaus noch vernickelt. Die Federn 6 dienen zur Rückführung der Nadelplatte 5 und zentrieren darüber hinaus die Nadelplatte. Die einzelne Membran 7 ist zwischen der Vakuumplatte 3 und einer Montageplatte 8 eingeklemmt. Die untere Teilplatte 26 der Nadelplatte 5 liegt direkt auf der Membran 8 auf. Die obere Teilplatte 25 hält bei druckentlasteter Membran 7 einen Abstand zu einer Deckfläche 27 der Kammer 23 ein. Sobald die Membran 7 mit Druck beaufschlagt wird, wird die Nadelplatte 5 insgesamt angehoben, und zwar so lange, bis die obere Teilplatte 25 gegen die Deckfläche 27 der Kammer 23 anliegt. Dadurch werden die Nadeln 4 in den Führungen 22 nach oben gedrückt, so daß die Nadelspitzen 18 von der Oberfläche der Patrize 1 vorstehen und eine Oberflächenhaut 19 der Schale 20 durchdringen. Die Membran 7 ist beispielsweise eine ca. 1 mm dicke Polyurethan-Platte mit einer Shore-Härte A von 70°. Die Membran 7 wird über einen Kanal 29 in der Montageplatte 8 mit Druckluft beaufschlagt. Der Kanal 29 ist hierzu mit einer zentralen Ausnehmung 31 unterhalb der Mitte der Membran 7 verbunden. Eine einzelne Membran 7 kann mehrere Nadelplatten 5 antreiben. Die Anzahl der Nadelplatten ist im allgemeinen abhängig von der Größe der zu formenden Schale 20 bzw. vom Produkttyp. Auch die Matrixverteilung der Nadeln 4 in den Nadelplatten 5 hängt vom Produkttyp ab. Im allgemeinen gilt jedoch, daß jede Nadelplatte 5 von einer eigenen Membran 7 betätigt wird. In einem Formblock 11 können 3x5 bis 6x6 Nadelplatten 5 und dazugehörige Membranen 7 untergebracht sein. Das Material der Nadelplatten 5 ist im allgemeinen rostfreier Stahl, jedoch sind auch andere Metallegierungen auf der Basis von Eisen, Nickel und Chrom hierfür geeignet.

Wie schon voranstehend erwähnt wurde, dehnt sich die Membran 7 bei Druckbeaufschlagung nach oben aus und drückt die mit den Nadeln 4 bestückte Vakuumplatte 3 um ca. 3 mm nach oben, so lange, bis die obere Teilplatte 25 gegen die Deckfläche 27 als Anschlag anliegt. Die Nadelspitzen 18 durchlöchern dabei die dünne Oberflächenhaut 19 an der Innenseite 13 der Schale 20. Nach Ablassen der Druckluft bringen die zwischen den Nadelplatten 5 und der Deckfläche der Zylinderkammern 24 montierten Federn 6 die Nadelplatten und die Membrane 7 zurück in ihre Ausgangspositionen. Wenn alle Nadelplatten 5 wieder ihre Ausgangspositionen eingenommen haben, öffnet sich das Werkzeug der Thermoformanlage, die geformte und genadelte Schale 20 wird ausgeschoben, und ein neu aufgeheizter Abschnitt der Schaumfolie 16 wird vorgeschoben, und der Zyklus wiederholt sich.

Figur 4 zeigt einen Formblock 17 mit feststehenden Nadeln 14, der Teil einer Thermoformanlage 10 ist, wie sie in Figur 1 schematisch dargestellt ist. In Figur 4 sind nur eine Patrize 33, eine plane Gegendruckplatte 35, die feststehenden Nadeln 14 sowie eine Schale 20 angedeutet, die sich zwischen der Patrize 33 und der planen Gegendruckplatte 35 befindet. Bei diesem Werkzeug mit feststehenden Nadeln 14 sind diese gemäß einem vorgegebenen Muster fest auf der Patrize 33 montiert und stehen etwa 3 mm von der Oberfläche der Patrize vor. Die Herstellung der einzelnen Schale 20 nach dem Thermoformverfahren läuft in der gleichen Weise mit diesem Formblock 17 mit feststehenden Nadeln ab, wie das Thermoformverfahren mit beweglichen Nadeln, das zuvor anhand von Figur 3 erläutert wurde. Der Formblock 17 umfaßt neben der Patrize 33 eine jeweils nicht dargestellte Kühl- und Vakuumplatte. Die Kunststoff-Schaumfolie wird ebenfalls mittels doppelseitigem Vakuum tiefgezogen, wobei die feststehenden Nadeln 14 die Haut an der Innenseite der Schale 20 perforieren.

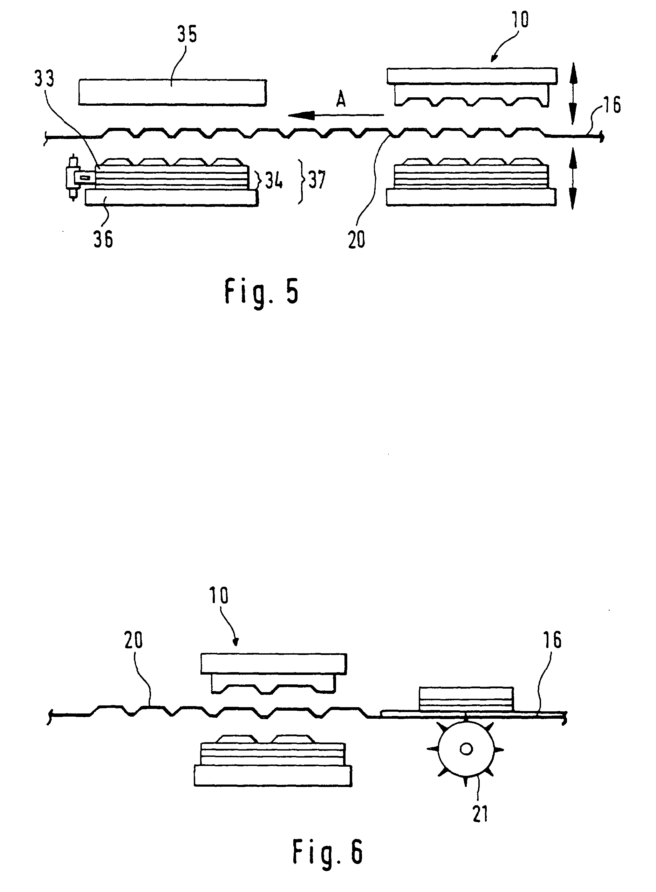

Bei einem weiteren Verfahren zum Perforieren von tiefgezogenen Produkten, wie Schalen aus Kunststoff-Schaumfolien, erfolgt die Nadelung nach Ausformen des Schalenprodukts und außerhalb des Werkzeuges der Thermoformanlage 10. Bei diesem Verfahren, das anhand der schematischen Figur 5 erläutert wird, werden die Schalen 20 nach dem Thermoformen der Kunststoff-Schaumfolie in der Thermoformanlage 10 in Richtung des Pfeils A zu einem separaten, in der Tiefziehanlage montierten Formblock 37 geführt. Der Formblock 37 entspricht im wesentlichen dem Formblock der Figur 4 und umfaßt eine Patrize 33, eine Kühlplatte 34 und eine Montageplatte 36. Die feststehenden Nadeln 14 stehen mit ihren Nadelspitzen bis zu 3 mm von der Patrize 33 vor und sind mit ihren Nadelenden entweder in der Patrize 33 oder in der Kühlplatte 34 verankert. Die Außenseite der Schale 20 liegt während der Perforation an der Gegendruckplatte 35 an.

Anhand von Figur 6 wird ein weiteres Verfahren zur Nadelung von einer Kunststoff-Schaumfolie 16 beschrieben. Bei diesem Verfahren wird die Kunststoff-Schaumfolie 16 vor dem Aufheizen und der Thermoformung in der Thermoformanlage 10 mit Hilfe einer Nadelwalze 21 an der Innenseite perforiert. Die Nadelwalze 21 ist mit feststehenden Nadeln 14 ausgerüstet, deren Nadelspitzen 18 gleichfalls bis zu etwa 3 mm von der Walzenoberfläche vorstehen. Die Nadelwalze 21 ist entweder am Eingang der Tiefziehanlage bzw. an dem Extruder angeordnet.

Die Kunststoff-Schaumfolie kann durch Zusatz von Masterbatches während der Extrusion gefärbt werden. Ebenso ist es möglich, in einer Tandem-Extrusionsanlage die Kunststoff-Schaumfolie zusammen mit einer gefärbten Deckschicht aus dem gleichen oder unterschiedlichem Material wie die Kunststoff-Schaumfolie zu koextrudieren. Ein derartig koextrudiertes Produkt aus Kunststoff-Schaumfolie und gefärbter Deckschicht wird nach der Koextrusion aufgeheizt, in einer Thermoformanlage mit Hilfe eines doppelseitigen Vakuums tiefgezogen und wärmefixiert. Anschließend wird die Deckschicht durchlöchert und die Kunststoff-Schaumfolie mittels feststehender oder beweglicher Nadeln perforiert. Mit dem Koextrudat aus Kunststoff-Schaumfolie und Deckschicht können sämtliche Thermoformgebungen sowie Perforierungen mittels Nadeln mit den gleichen Verfahren, wie sie voranstehend anhand der Figuren beschrieben wurden, durchgeführt werden.

Die aus offenzelligen Kunststoff-Schaumfolien hergestellten Schalen oder Behälter werden mittels Vakuum, das auf beide Seiten der Kunststoff-Schaumfolie einwirkt, und Wärme in einer Formstation geformt. Nach dem Formvorgang muß die Innenseite der Schale perforiert werden, mit Hilfe von Nadeln. Durch die Perforation wird erreicht, daß die von dem in der Schale zu verpackenden Nahrungsmittel abgegebene Flüssigkeit, beispielsweise der Saft von Fleischstücken, im Kern des offenzelligen Schaumes absorbiert werden kann. Die Perforation der Schalen kann während des Tiefziehprozesses an zwei Stellen durchgeführt werden, und zwar mittels einer Membranplatte in der Formstation, wie sie in der deutschen Patentanmeldung P 44 46 442.8 beschrieben ist, oder mit Hilfe von Nadelkolben, die in der Patrize angeordnet sind. Beim Perforieren in der Formstation ist es notwendig, daß die Perforation erst stattfinden kann, nachdem die Schale ausgeformt und abgekühlt ist.

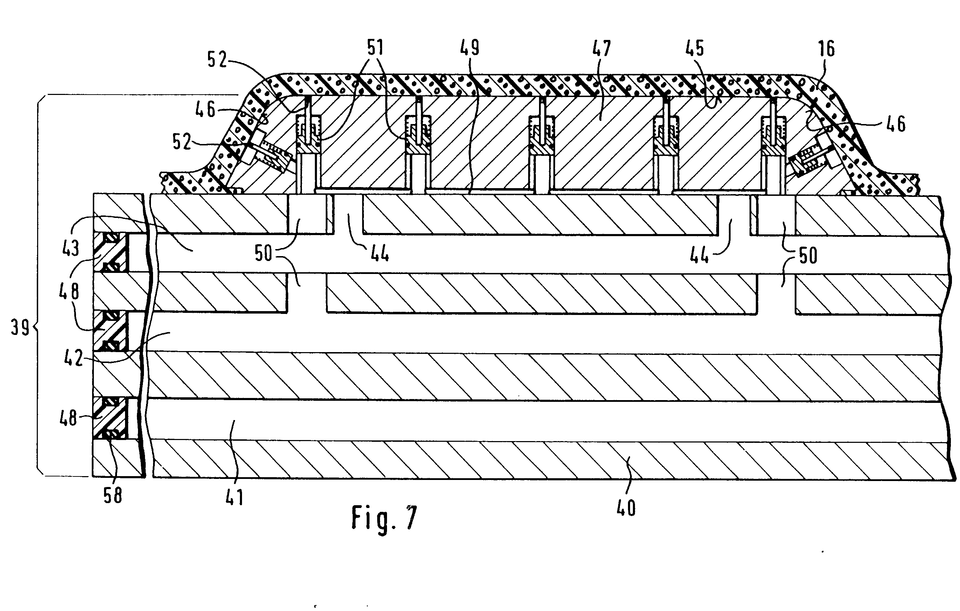

Figur 7 zeigt einen Querschnitt durch eine weitere Vorrichtung zum Perforieren der glatten geschlossenen Oberflächen einer offenzelligen Kunststoff-Schaumfolie, die zu einer Schale oder zu einem Behälter thermogeformt ist. Ein feststehender Formblock 39 umfaßt eine Grundplatte 40 und eine Patrize 47, in der eine Anzahl von Nadelkolben 51 angeordnet ist. Die Patrize 47 besitzt einen Querschnitt entsprechend der zu formenden Schale, die Seitenwände 46 und einen Boden 45 aufweist. In der feststehenden Grundplatte 40 sind zueinander parallele, übereinanderliegende Kanäle 41, 42, 43 für ein Kühlmedium, Vakuum und für ein Druckmedium untergebracht. Die Kanäle 41 bis 43 sind auf der einen Seite durch Stopfen 48 abgeschlossen, die Dichtungen 58 aufweisen. In Figur 7 ist schematisch eine Kunststoff-Schaumfolie 16 dargestellt, die an der Oberseite der Patrize 47 anliegt. Die Nadelkolben 51 innerhalb der Patrize 47 sind senkrecht auf die Seitenwände 46 und den Boden 45 der Schale gerichtet. Wenn die Nadeln 52 aus dem Nadelkolben 51 ausfahren und die Kunststoff-Schaumfolie 16 perforieren, wird der Vorteil erzielt, daß die Perforation der Seitenwände 46, ebenso wie die Perforation des Bodens 45, senkrecht auf diese Flächen durchgeführt wird. Dadurch kann die Perforation, insbesondere in den Bereichen der Seitenwände, tiefer erfolgen als bei der Membranplatte gemäß der zuvor erwähnten deutschen Patentanmeldung, da bei dieser Membranplatte alle Nadeln in die gleiche senkrechte Richtung auf den Boden einer Schale ausfahren können, so daß die zum Boden geneigten Seitenwände nur schräg zu ihren Flächen perforiert werden. Ein weiterer Vorteil ergibt sich dadurch, daß die Löcher in den Seitenwänden weitgehend kreisförmig sind, während sie bei einer Membranplatte oval oder länglich sind, wodurch die Stabilität der Seitenwände beeinträchtigt wird. Es wird somit die Gefahr einer Oberflächenbeschädigung der schrägen Seitenwände einer Schale verringert.

Die Anwendung von Nadelkolben 51 ermöglicht es, daß unterschiedliche Perforationstiefen der Löcher in den Seitenwänden und im Boden der Schale vorgesehen werden können. So ist es beispielsweise möglich, den Boden 3 mm tief zu perforieren und die Seitenwände im Bereich von 2,5 bis 3 mm zu perforieren.

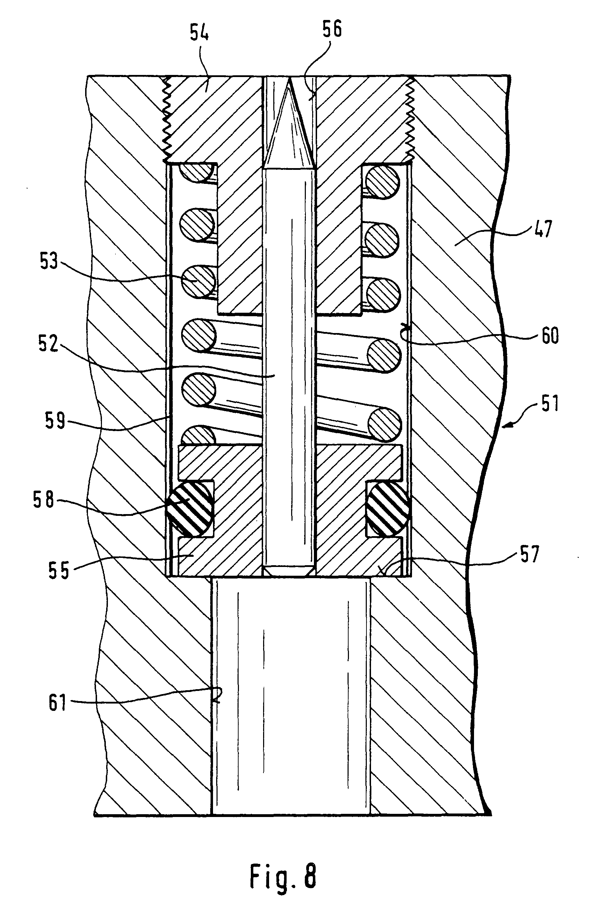

Der Kanal 42 für das Vakuum steht über zumindest zwei vertikale Vakuumanschlußbohrungen 50 mit dem Inneren der Patrize 47 in Verbindung. An der Unterseite der Patrize 47 ist ein Verteilerkanal 49 angebracht, der über Vertikalbohrungen 44 mit dem Kanal 43 für das Druckmedium verbunden ist. Bei dem Druckmedium handelt es sich im allgemeinen um Preßluft. Die Nadelkolben 51 sind in direkter Verbindung mit dem Verteilerkanal 49, so daß bei Beaufschlagung des Verteilerkanals 49 über den Kanal 43 mit Preßluft jeder der Nadelkolben mit Preßluft beaufschlagt wird. Dadurch wird erreicht, daß die Nadeln 52, wie nachstehend noch anhand von Figur 8 näher beschrieben wird, ausfahren und den Boden und die Seitenwände der aus der Kunststoff-Schaumfolie 16 geformten Schale perforieren.

Wie Figur 8 zeigt, besteht der einzelne Nadelkolben 51 aus einer T-förmigen Führung 54, einer Nadel 52, einer Druckfeder 53, einem Kolbenzylinder 59 und einem im Kolbenzylinder befindlichen Kolbenring 55. Die T-förmige Führung 54 weist ein Außengewinde auf und ist mit diesem Außengewinde in einen zylindrischen Hohlraum 60 innerhalb der Patrize 47 eingeschraubt. Dieser Hohlraum ist über einen Bund 57 gegen einen weiteren zylindrischen Hohlraum 61 mit kleinerem Durchmesser abgesetzt, der direkt mit dem Verteilerkanal 49 verbunden ist. Die Führung 54 besteht beispielsweise aus Messing, Aluminium oder einem sonstigen Metall, kann aber auch aus Kunststoff gefertigt sein. Die Druckfeder 53 liegt mit dem einen Ende an der Unterseite der T-förmigen Führung und mit ihrem anderen Ende an der Oberseite des Kolbenringes 55 an. Der Kolbenring 55 befindet sich im unteren Teil des Hohlraums 60 und ist gegen die Seitenwände des Hohlraums 60 durch eine Dichtung 48, z.B. eine Ringdichtung, abgedichtet.

Das obere Ende des Kolbenzylinders 58 liegt gegen eine horizontale Unterseite der T-förmigen Führung 54 an, während das untere Ende des Kolbenzylinders sich gegen den Bund 57 des Hohlraums 60 in der Patrize 47 abstützt. Die Druckfeder 53 umschließt die Nadel 52, die mit ihrer Spitze innerhalb einer Bohrung 56 der Führung 54 gleitet. Das Ende der Nadel ist in dem Kolbenring 55 verankert. Das Ausgangsmaterial für die Nadeln 52 sind sogenannte Auswerfstifte aus einer Nickel-Chrom-Legierung gemäß DIN 1530 D oder DIN 9861. Diese Auswerfstifte werden auf die gewünschte Länge geschnitten und mit einer Spitze versehen, deren Öffnungswinkel zwischen 10 und 60° beträgt, insbesondere 30 °. Weitere bevorzugte Öffnungswinkel für die Nadeln 52 betragen 23° oder 27°. Die Nadeln sind im allgemeinen vernickelt. Die Druckfeder 55 sorgt dafür, daß beim Abschalten der Zufuhr des Druckmediums zu dem Verteilerkanal 49 die Nadel 52 komplett in die Patrize 47 bzw. in den Block, der die Patrize bildet, eingefahren ist. Da beim Abschalten der Zufuhr des Druckmediums der Druck auf die Unterseite des Kolbenringes 55 entfällt, reicht die Federkraft der Druckfeder 53 aus, um den Kolbenring 55 nach unten bis zum Aufliegen auf den Bund 57 zu drücken und damit auch die in dem Kolbenring 55 gelagerte bzw. verankerte Nadel 52 in Figur 8 nach unten zu drücken, so daß die Spitze der Nadel innerhalb der Bohrung 56 der Führung 54 zu liegen kommt.

Es ist auch eine Ausführungsform denkbar, die ohne Druckfeder auskommt, wobei der Kolbenring 55 nach dem Abschalten des Druckmediums einem Unterdruck ausgesetzt wird und daher nach unten, bis zum Aufliegen auf dem Bund 57, zurückgezogen und somit die Nadel 52 eingefahren wird. Hierzu kann ein umschaltbares Dreiwegeventil zwischen dem Druckkanal 43, dem Vakuumkanal 42 und der Vakuumanschlußbohrung 50 geschaltet sein. Dieses Dreiwegeventil schaltet für das Zurückziehen der Nadeln dann vom Druckkanal auf den Vakuumkanal um.

Die Perforation einer thermogeformten Schale läuft wie folgt ab:
Sobald die Kunststoff-Schaumfolie 16 auf der Patrize 47 aufliegt, schließt die Patrize und eine nicht dargestellte Matrize, und es wird sowohl über die Patrize als auch über die Matrize Vakuum auf die Kunststoff-Schaumfolie 16 aufgebracht. Mit Hilfe dieses Vakuums wird das Produkt, ob Schale oder Behälter, zu 100 % ausgeformt. Die Patrize und Matrize werden kontinuierlich gekühlt bzw. temperiert, und nach einer vorgegebenen Kühlzeit wird über den Kanal 43 für das Druckmedium stoßweise Preßluft dem Verteilerkanal 49 zugeführt und somit sämtliche Nadelkolben 51 in der Patrize 47 gleichzeitig mit Preßluft beaufschlagt. Diese Preßluft drückt den Kolbenring 55 gegen die Federkraft der Feder 53 in dem Hohlraum 60 nach oben, so daß die Nadelspitzen der Nadeln 52 aus der Oberfläche der Patrize 47 heraustreten und den Boden 45 und die Seitenwände 46 der Schale perforieren. Die Druckfeder 53 wird bei diesem Vorgang durch den Preßluftstoß zusammengedrückt. Danach wird die Preßluftzufuhrleitung entlüftet, und die Patrize und Matrize werden geöffnet. Der Kolbenring 55 wird beim Entlüften der Preßluftzufuhrleitung druckentlastet, so daß die Druckfeder 53 den Kolbenring 55 nach unten bis zum Anliegen auf dem Bund 57 drücken kann, wodurch die Spitzen der Nadeln 53 in die Bohrungen 56 der Führungen 54 zurückgezogen werden und der nächste Perforationsvorgang starten kann.

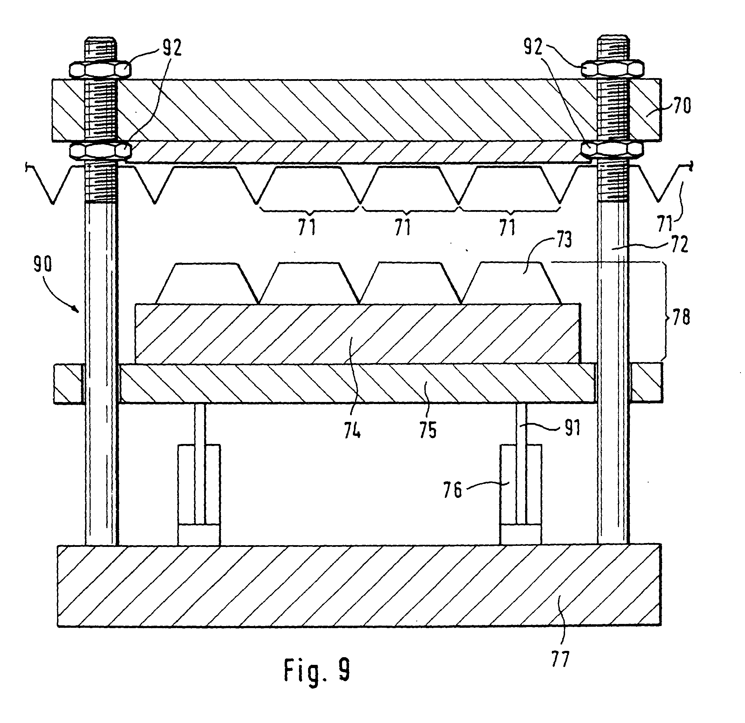

Figur 9 zeigt einen Schnitt durch eine weitere Vorrichtung zum Perforieren der einen glatten, geschlossenen Oberfläche einer Kunststoff-Schaumfolie, weiterhin auch als Perforierstation bezeichnet. Die Perforierstation 90 besteht aus einem Grundgestell 77, auf dem vertikale Führungsstangen 72 befestigt sind, entlang denen eine Montageplatte 75 verschiebbar ist. Am oberen Ende der Führungsstangen 72 ist eine Andruckplatte 70 montiert, die in ihrer Höhe auf den Führungsstangen 72 einstellbar ist. Die Andruckplatte 70 wird in ihrer Position mittels Schraubmuttern 92, die an der Ober- und Unterseite der Andruckplatte 70 jeweils bündig anliegen, lagefixiert. Auf der Montageplatte 75 ist ein Formblock 78 angeordnet, der aus einer Grundplatte 74 und Perforierblöcken 73 besteht.

Die von der Thermoformanlage zu der Perforierstation 90 transportierte Kunststoff-Schaumfolie mit den thermogeformten Produkten 71, wie z.B. Schalen oder Behältern, liegt horizontal an der Unterseite der Andruckplatte 70 an, und die Montageplatte 75 mit den Perforierblöcken 73 kann dann in Richtung Andruckplatte bzw. Kunststoff-Schaumfolie so weit angehoben werden, daß die in den Perforierblöcken angeordneten Nadeln in die Innenseiten der Produkte einstechen können. Die Höhe, in der die Andruckplatte 70 auf den Führungsstangen 72 lagefixiert wird, richtet sich nach der jeweiligen Tiefe der Produkte. Mit unterschiedlichen Tiefen der Produkte ändert sich auch jeweils die Höhenposition der Andruckplatte 70 auf den Führungsstangen 72. Dadurch ist es möglich, jeweils einen unveränderten Hub für die Montageplatte 72 beizubehalten, wenn sich von Charge zu Charge die Tiefe der Produkte ändert.

Auf dem Grundgestell 77 sind elektropneumatische oder elektromechanische Antriebszylinder 76 angeordnet, deren Kolbenstangen 91 gegen die Unterseite der Montageplatte 75 anliegen und diese entsprechend dem vorgegebenen Hub anheben bzw. nach Beendigung des Perforiervorganges absenken.

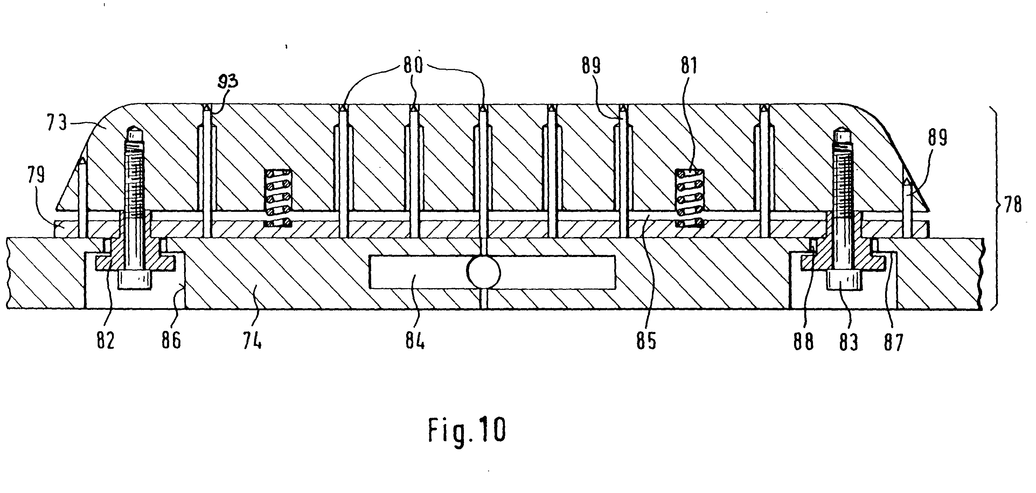

Wie aus Figur 10 ersichtlich ist, besteht der Formblock 78 im wesentlichen aus der Grundplatte 74, Perforierblöcken 73 und einer Nadelplatte 79, die in einer Druckmedium-Kammer 85 zwischen der Grundplatte und den Perforierblöcken untergebracht ist. Die Grundplatte 74 weist übereinander angeordnete, zylindrische Löcher 86, 87 mit unterschiedlichen Durchmessern auf, die über eine Schulter 87 miteinander verbunden sind. In den Löchern sind Führungs-/Abstandshalter 82 eingesetzt, die mittels Befestigungsschrauben 83 mit den Perforierblöcken 73 verbunden sind. Die Befestigungsschrauben 83 durchsetzen zentral diese Führungs-/Abstandshalter 82. Der Umriß der Führungs-/Abstandshalter 82 ist an den Umriß der zylindrischen Löcher 86, 87 angeglichen. Die Führungs-/Abstandshalter 82 sind durch die Nadelplatte 79 hindurchgeführt und liegen mit ihren Endflächen bündig an der Unterseite der Perforierblöcke 73 an. In Figur 10 ist nur ein einziger Perforierblock 73 gezeigt, jedoch sind auf der Grundplatte 74 eine Anzahl von Perforierblöcken in einer Matrixanordnung angebracht, wie dies auch der schematischen Ansicht der Perforierstation 90 in Figur 9 zu entnehmen ist. Die Nadelplatte 79 füllt die Druckmedium-Kammer 85, die während des Perforationsvorgangs mit einem Druckmedium, wie Preßluft, beaufschlagt wird, nicht vollständig aus, vielmehr besteht ein Spalt bzw. ein Spiel zwischen der Oberseite der Nadelplatte und der Unterseite der Perforierblöcke. Die Größe dieses Spalts bestimmt auch, wie weit die Nadelspitzen aus der Oberfläche der Perforierblöcke 73 heraustreten, wie später noch näher erläutert werden wird. Die Nadeln 89 sind mit ihren unteren Enden fest in der Nadelplatte 79 verankert und mit ihren oberen Enden durch Bohrungen 93 hindurchgeführt sie bilden innerhalb des einzelnen Perforierblocks 73 eine Nadelmatrix 80, die aus einer rechteckigen oder quadratischen Anordnung von Reihen von Nadeln besteht. In dem einzelnen Perforierblock 73 sind Sacklöcher vorhanden, beispielsweise vier Stück, die Eckpunkte eines Rechtecks oder eines Quadrats bilden und in die Druckfedern 81 eingesetzt sind. Das eine Ende jeder Druckfeder 81 stützt sich gegen eine Einsenkung in der Oberseite der Nadelplatte 79 und das andere Ende jeder Druckfeder gegen die Abschlußfläche des entsprechenden Sackloches ab. In der Ruhestellung werden die Perforierblöcke 73 durch die Druckfedern 81 in Abstand zu der Nadelplatte 79 gehalten. Die Maßführung der Führungs/Abstandshalter 82, die wie eine Büchse ausgestaltet sind, sorgt dafür, daß die Spitzen der Nadeln 89 mit der Oberfläche der Perforierblöcke 73 abschließen und des weiteren auch dafür, daß ein vorgegebener Abstand zwischen der Nadelplatte 79 und den Perforierblöcken 73 eingehalten wird. Dieser Abstand entspricht der Perforiertiefe, mit der die Nadeln in die Produkte einstechen, und beträgt beispielsweise 2,5 bis 3 mm. Es sind auch größere Perforiertiefen möglich, unter der Voraussetzung, daß ein Durchstechen der Wände des Produkts vermieden wird.

In der Grundplatte 74 ist ein Kanal 84 für ein Druckmedium vorhanden, der mit einer nicht gezeigten Druckquelle, die z.B. Preßluft liefert, verbunden ist. Der Kanal 84 ist über vertikale Bohrungen mit der Druckmedium-Kammer 85 in Verbindung. In der Grundplatte befinden sich des weiteren nicht direkt gezeigte Kanäle für das Druckmedium, die mit einer Tiefe von 0,5 mm eingefräst sind. Die Länge und Breite dieser Kanäle richtet sich nach den Abmessungen der Produkte. Der Kanal 84 steht mit den übrigen Kanälen für das Druckmedium in Verbindung.

Der Perforationsvorgang läuft wie folgt ab:
Sobald die Kunststoff-Schaumfolie mit den thermogeformten Produkten 71 gegen die Unterseite der Andruckplatte 70 anliegt, wird die Montageplatte 75 durch die Antriebszylinder 76 angehoben, so daß die Perforierblöcke 73, die zusammen mit der Grundplatte 74 auf der Montageplatte 75 befestigt sind, sich den Innenseiten der Produkte nähern. Wenn die Perforierblöcke 73 letztendlich die Produkte 71 gegen die Andruckplatte 70 gepreßt haben, erfolgt ein Preßluftstoß über den Kanal 84 und die in der Grundplatte 74 vorhandenen, nicht dargestellten Kanäle auf die Unterseite der Nadelplatte 79. Dadurch wird die Nadelplatte 79 gegen die Federkraft der Druckfedern 81 bis zum Anschlag an der Unterseite der Perforierblöcke 73 angehoben. Bei ausreichend hohem Preßluftdruck bewegt sich die Nadelplatte 79 frei schwebend gegen die Perforierblöcke 73. Die in der Nadelplatte 79 verankerten Nadeln 89 treten dann aus der Oberfläche der Perforierblöcke 73 heraus und dringen in die Innenwände der Produkte 71 ein, wobei die Perforationstiefe, wie schon vorstehend erwähnt wurde, gleich dem Abstand zwischen der Oberseite der Nadelplatte 79 und der Unterseite der Perforierblöcke 73 entspricht. Durch das Freischweben der Nadelplatte kommt es zu einem Selbstzentrieren der Nadeln. Dies gilt auch für das Einpassen der Perforierblöcke 73 in die Produkte 71, wodurch es zu einem Selbstzentrieren der Perforierblöcke in den ausgeformten Produkten kommt. Dabei können kleine Abweichungen von bis zu ± 2 mm, infolge von Schrumpf der Kunststoff-Schaumfolie und Veränderungen in der Schlaglänge der Folienbahn, kompensiert werden. Die Schlaglänge ist die für einen Tiefziehtakt benötigte Länge der Kunststoff-Schaumfolie.

Nachdem die Nadeln 89 die Produkte perforiert haben, werden die Montageplatte 75 und die darauf angebrachten Perforierblöcke 73 abgesenkt und die Preßluftzufuhr abgeschaltet. Die Nadelplatte 79 wird dann durch die Druckfedern 81 gegen die Grundplatte 74 gedrückt, so daß die Nadeln 89 aus den Innenseiten der Produkte herausgezogen werden. Sobald die Montageplatte 75 bzw. die Perforierstation 90 ihre Ausgangsstellung eingenommen hat, wird die Kunststoff-Schaumfolie mit den perforierten Produkten 71 weitertransportiert, und es kann ein neuer Perforiervorgang eingeleitet werden.

## Patentansprüche

1. Verfahren zum Perforieren von glatten, geschlossenen Oberflächen extrudierter, offenzelliger Kunststoff-Schaumfolien, **dadurch gekennzeichnet, daß** die extrudierte Kunststoff-Schaumfolie (16) auf eine vorgegebene Temperatur aufgeheizt, in einer Thermoformanlage (10) mit Hilfe eines doppelseitigen Vakuums tiefgezogen und wärmefixiert wird und eine von zwei geschlossenen Oberflächenhäuten der Kunststoff-Schaumfolie (16), nach der Thermoformung, mittels Nadeln (4), die beweglich in Vakuumkanälen (22) der Thermoformanlage (10) geführt sind, perforiert wird.

2. Verfahren nach Anspruch 1, **dadurch gekennzeichnet, dass** die Seitenwände und der Boden eines aus der Kunststoff-Schaumfolie (16) geformten Erzeugnisses (20) jeweils senkrecht zu den Oberflächen gleich/unterschiedlich tief perforiert werden.

3. Verfahren nach Anspruch 2, **dadurch gekennzeichnet, dass** die Nadeln (4) mittels Druckluft aus einer Matrize (13) zu Perforationsbeginn ausgefahren werden und dass am Perforationsende nach Abschalten der Druckluft, die Nadeln (4) mittels Federdruck in die Matrize eingefahren werden.

4. Verfahren zum Perforieren von glatten geschlossenen Oberflächen extrudierter, offenzelliger Kunststoff-Schaumfolien, **dadurch gekennzeichnet, daß** die extrudierte Kunststoff-Schaumfolie (16) auf eine vorgegebene Temperatur aufgeheizt, in einer Thermoformanlage (10) mit Hilfe eines doppelseitigen Vakuums tiefgezogen und wärmefixiert wird und die thermogeformten Produkte (71) aus der Thermoformanlage (10) in eine Perforierstation (90) transportiert und in dieser gegen eine feststehende Andruckplatte (70) mittels verschiebbaren Perforierblöcken (73) angedrückt werden und dass eine Nadelplatte (79) freischwebend mittels eines Druckmediums gegen die Perforierblöcke (73) angehoben wird, um die Nadelspitzen der in der Nadelplatte (79) verankerten Nadeln (89) gegen die thermogeformten Produkte (71) zu drücken und deren an den Perforierblöcken anliegende Oberfläche zu durchstechen.

5. Verfahren nach Anspruch 4, **dadurch gekennzeichnet, dass** beim Anheben der Perforierblöcke (73) bis zum dichten Abschließen mit den thermogeformten Produkten (71) die Perforierblöcke (73) sich während des Schwebens in den thermogeformten Produkten (71) selbst zentrieren.

6. Verfahren nach Anspruch 4, **dadurch gekennzeichnet, dass** die Perforierblöcke (73) mit einstellbarem Hub mittels elektropneumatischer oder elektromechanischer Antriebszylinder (76) gegen die feststehende Andruckplatte (70) angehoben werden.

7. Vorrichtung zum Perforieren von glatten, geschlossenen Oberflächen von Erzeugnissen aus offenzelligen Kunststoff-Schaumfolien, mit einem Werkzeug, das mit Nadeln in Matrixanordnung ausgestattet ist, deren Nadelspitzen während eines Perforationsvorgangs von der Oberfläche des Werkzeugs soweit vorstehen, dass sie die Oberfläche des Erzeugnisses durchlöchern, **dadurch gekennzeichnet, dass** Nadeln (4) beweglich in Vakuumkanälen (22) einer Thermoformanlage (10) angeordnet sind und dass zu einem Formblock (11) für die Formgebung der Innenseite des Erzeugnisses ein komplementärer Formblock (9, 15) vorhanden ist.

8. Vorrichtung nach Anspruch 7, **dadurch gekennzeichnet, dass** der Formblock (11) eine Patrize (1), eine Kühlplatte (2), eine Vakuumplatte (3), bewegliche Nadeln (4), eine Nadelplatte (5), Federn (6) für die Rückstellung der Nadelplatte, Membranen (7) und eine Montageplatte (8) umfasst, die durch Schrauben (30) zusammengehalten sind.

9. Vorrichtung nach Anspruch 8, **dadurch gekennzeichnet, dass** ein Formblock (9) für die Außenseite (12) der Kunststoff-Schaumfolie (16) eine Matrize (15) aufweist, deren an der Außenseite anliegende Fläche komplementär zu der an der Innenseite anliegenden Fläche der Patrize (1) ausgebildet ist.

10. Vorrichtung nach Anspruch 7, **dadurch gekennzeichnet, dass** die Formblöcke (9, 11) bis auf einen Abstand, entsprechend der einstellbaren Wandstärke einer aus der Kunststoff-Schaumfolie (16) tiefgezogenen Schale (20), aufeinander zu bewegbar sind.

11. Vorrichtung nach Anspruch 8, **dadurch gekennzeichnet, dass** die Vakuumkanäle (22) für die beweglichen Nadeln (4) in dem Formblock (11) vorhanden sind und dass sich die Vakuumkanäle, die einen Durchmesser größer als der Nadeldurchmesser haben, sich von einer Kammer (23) an der Unterseite der Vakuumplatte (3) durch die Kühlplatte (2) und die Patrize (1) hindurch bis zu der Außenseite des Formblocks (11) erstrecken.

12. Vorrichtung nach Anspruch 11, **dadurch gekennzeichnet, dass** sich der Querschnitt der Vakuumkanäle (22) auf einer Länge von einigen Zehnteln Millimeter, beginnend unterhalb der Außenseite und endend auf der Außenseite des Formblocks (11), auf den Querschnitt der Nadeln (4) verengt.

13. Vorrichtung nach Anspruch 11, **dadurch gekennzeichnet, dass** durch die Vakuumkanäle (22) an die Innenseite (13) der Kunststoff-Schaumfolie (16) beim Tiefziehen Vakuum anlegbar ist und dass zumindest einige Vakuumkanäle (22) über eine bestimmte Länge zu Zylinderkammern (24) aufgebohrt sind, die sich von der Kammer (23) durch die Vakuumplatte (3) hindurch bis teilweise in die Kühlplatte (2) hinein erstrecken.

14. Vorrichtung nach Anspruch 13, **dadurch gekennzeichnet, dass** in den Zylinderkammern (24) die Federn (6) untergebracht sind, die die Nadeln (4) umschließen und dass das eine Ende jeder Feder gegen die Deckfläche der zugehörigen Zylinderkammer (24) und das andere Ende gegen die zugehörige Nadelplatte (5) unter Druck anliegt.

15. Vorrichtung nach Anspruch 14, **dadurch gekennzeichnet, dass** die Nadelplatten (5) jeweils aus zwei aufeinanderliegenden Teilplatten (25, 26) bestehen, von denen die untere Teilplatte (26) auf der Membran (7) aufliegt und die obere Teilplatte (25), bei Druckentlastung der Membran, einen Abstand zu einer Deckfläche (27) der Kammer (23) einhält und bei Druckbeaufschlagung der Membran, gegen die Deckfläche (27) der Kammer (23) anliegt.

16. Vorrichtung nach Anspruch 15, **dadurch gekennzeichnet, dass** die Nadeln (4) mit ihren unteren Enden in der oberen Teilplatte (25) verankert sind und dass Löcher (28) in der oberen Teilplatte (25) ein Übermaß gegenüber den hindurchgeführten Nadeln (4) besitzen, um ein reibungsloses Spiel während der Bewegungen der Nadeln zu ermöglichen.

17. Vorrichtung nach Anspruch 8, **dadurch gekennzeichnet, dass** die einzelne Membran (7) zwischen der Montageplatte (8) und der Vakuumplatte (3) eingeklemmt ist, dass in der Montageplatte (8) ein Kanal (29) vorhanden ist, der mit einer zentralen Ausnehmung (31) unterhalb der Mitte der Membran verbunden ist und dass die Unterseite der Membran mit über den Kanal und die Ausnehmung zugeführter Druckluft beaufschlagbar ist.

18. Vorrichtung nach Anspruch 8, **dadurch gekennzeichnet, dass** die Nadeln (4) eine Nadelspitze (18) mit einem Öffnungswinkel von 10° bis 60°, insbesondere von 30°, aufweisen.

19. Vorrichtung nach Anspruch 18, **dadurch gekennzeichnet, dass** die Nadeln (4) aus einer NiCr-Legierung bestehen und dass die Nadelspitze (18) vernickelt ist.

20. Vorrichtung nach Anspruch 8, **dadurch gekennzeichnet, dass** in einem Formblock (11) 3x5 bis 6x6 Nadelplatten (5) und dazugehörige Membranen (7) untergebracht sind.

21. Vorrichtung nach Anspruch 8, **dadurch gekennzeichnet, dass** die Kühlplatte (2) auf der Unterseite Kühlkanäle (32) aufweist, die durch die Vakuumplatte (3) abgeschlossen sind und durch die ein Kühlmedium fließt und dass die Vakuum- (3) und die Kühlplatte (2) aus Aluminium gefertigt sind.

22. Vorrichtung nach Anspruch 8, **dadurch gekennzeichnet, dass** die Nadelplatten (5) aus rostfreiem Stahl und die Membranen (7) aus Polyurethan bestehen.

23. Vorrichtung zum Perforieren von glatten, geschlossenen Oberflächen von Erzeugnissen aus offenzelligen Kunststoff-Schaumfolien mit einem Werkzeug, das mit Nadeln in Matrixanordnung ausgestattet ist, deren Nadelspitzen während eines Perforationsvorgangs von der Oberfläche des Werkszeugs soweit vorstehen, dass sie die Oberfläche des Erzeugnisses durchlöchern, **dadurch gekennzeichnet, dass** die Nadeln (52, 89) beweglich in Bohrungen (56,93) in Formblöcken (39, 78) angeordnet sind, die Perforierblöcke (73) aufweisen, die als Patrizen (47) an den Innenseiten der Erzeugnisse anliegen und dass Matrizen, komplementär zu den Perforierblöcken (47) ausgebildet oder eine plane Andruckplatte (70) vorhanden sind, die jeweils an den Außenseiten der Erzeugnisse anliegen.

24. Vorrichtung nach Anspruch 23 **dadurch gekennzeichnet, dass** derfeststehende Formblock (39), der die Seitenwände (46) und den Boden (45) einer Schale oder eines Behälters aus einer Kunststoffschaumfolie (16) formt, eine feststehende Grundplatte (40) mit zueinander parallelen, übereinanderliegenden Kanälen (41, 42, 43) für ein Kühlmedium, Vakuum und ein Druckmedium und eine Patrize (47) aufweist, in der Nadelkolben (51) vorhanden sind, die senkrecht auf die Seitenwände (46) und den Boden (45) in ihren den Seitenwänden und dem Boden gegenüberliegenden Positionen innerhalb der Patrize gerichtet sind.

25. Vorrichtung nach Anspruch 24, **dadurch gekennzeichnet, dass** an der Unterseite der Patrize (47) ein Verteilerkanal (49) angebracht ist, der über zumindest eine Vertikalbohrung (44) mit dem Kanal (43) für das Druckmedium verbunden ist.

26. Vorrichtung nach Anspruch 24, **dadurch gekennzeichnet, dass** der Kanal (42) für das Vakuum über zumindest zwei vertikale Vakuumanschlussbohrungen (50) mit Hohlräumen (61) im Inneren der Patrize (47) in Verbindung steht.

27. Vorrichtung nach den Ansprüchen 24 und 25, **dadurch gekennzeichnet, dass** die Nadelkolben (51) mit dem Verteilerkanal (49) in Verbindung sind, so dass jeder Nadelkolben mit Druckluft beaufschlagbar ist.

28. Vorrichtung nach Anspruch 24, **dadurch gekennzeichnet, dass** der Nadelkolben (51) aus einer T-förmigen Führung (54), einer Nadel (52), einer Druckfeder (53), einem Kolbenzylinder (59) und einem Kolbenring (55) besteht.

29. Vorrichtung nach Anspruch 28, **dadurch gekennzeichnet, dass** das obere Ende des Kolbenzylinders (59) gegen eine horizontale Unterseite der T-förmigen Führung (54) anliegt, die in den Block der Patrize eingeschraubt ist, dass die Nadel (52) von der Druckfeder (53) umgeben ist und mit ihrer Spitze innerhalb einer Bohrung (56) der Führung (54) geführt ist, dass das Ende der Nadel in dem Kolbenring (55) verankert ist und dass das untere Ende des Kolbenzylinders sich gegen einen Bund (57) eines Hohlraums (60) in der Patrize (47) abstützt.

30. Vorrichtung nach Anspruch 29, **dadurch gekennzeichnet, dass** sich die Druckfeder (53) mit ihren Enden einerseits gegen die Unterseite der T-förmigen Führung und andererseits gegen den Kolbenring (55) abstützt.

31. Vorrichtung nach Anspruch 23, **dadurch gekennzeichnet, dass** die plane Andruckplatte (70) lagefest auf vertikalen Führungsstangen (72) eines Grundgestells (77) einer Perforierstation (90) montiert ist, und dass die Montageplatte (75), auf der eine Grundplatte (74) und die Formblöcke (73) befestigt sind, entlang den Führungsstangen (72) verschiebbar ist.

32. Vorrichtung nach Anspruch 31, **dadurch gekennzeichnet, dass** auf dem Grundgestell (77) elektropneumatische oder elektromechanische Antriebszylinder (76) angeordnet sind, deren Kolbenstangen (91) gegen die Unterseite der Montageplatte (75) anliegen, um diese anzuheben oder abzusenken.

33. Vorrichtung nach Anspruch 31, **dadurch gekennzeichnet, dass** die Andruckplatte (70) in ihrer Höhe auf den Führungsstangen (72) einstellbar ist.

34. Vorrichtung nach Anspruch 31, **dadurch gekennzeichnet, dass** die zu Erzeugnissen (71) thermogeformte Kunststoff-Schaumfolie gegen die Unterseite der Andruckplatte (70) so anliegt, dass sich die Perforierblöcke (73) unmittelbar vor der Perforation in den ausgeformten Erzeugnissen (71) zentrieren.

35. Vorrichtung nach Anspruch 31, **dadurch gekennzeichnet, dass** die Grundplatte (74) übereinander angeordnete, zylindrische Löcher (86, 88) mit unterschiedlichen Durchmessern aufweist, die über eine Schulter (87) miteinander verbunden sind, dass in den Löchern Führungs-/Abstandshalter (82) angeordnet sind, die über Befestigungsschrauben (83) mit den Perforierblöcken (73) verbunden sind, wobei der Umriss der Führungs-/Abstandshalter (82) dem Umriss der zylindrischen Löcher (86, 88) gleicht und die Führungs-/Abstandshalter (82) durch eine Nadelplatte (79) hindurchgeführt sind und an der Unterseite der Perforierblöcke (73) bündig anliegen.

36. Vorrichtung nach Anspruch 35, **dadurch gekennzeichnet, dass** die Nadelplatte (79), in der die Nadeln (89) verankert sind, zwischen der Grundplatte (74) und den Perforierblöcken (73) in einer Druckmedium-Kammer (85) mit einem Spiel gleich der Perforationstiefe der in die geformten Erzeugnisse (71) eindringenden Nadeln (89) angeordnet ist.

37. Vorrichtung nach Anspruch 36, **dadurch gekennzeichnet, dass** in den Perforierblöcken (73) eine Anzahl von Druckfedern (81) in Sacklöchern untergebracht sind, wobei sich das eine Ende jeder Druckfeder (81) gegen eine Einsenkung in der Oberseite der Nadelplatte (79) und das andere Ende jeder Druckfeder gegen die Abschlussfläche des entsprechenden Sacklochs abstützt.

38. Vorrichtung nach Anspruch 36, **dadurch gekennzeichnet, dass** in der Grundplatte (74) ein Kanal (84) für ein Druckmedium vorhanden ist, der mit einer Druckquelle und über vertikale Bohrungen mit der Druckmedium-Kammer (85) in Verbindung steht.

## Claims

1. Process for perforating smooth, closed surfaces of extruded, open-cell plastic foam sheets, **characterized in that** the extruded plastic foam sheet (16) is heated up to a predetermined temperature, thermoformed in a thermoforming unit (10) with the aid of a vacuum on both sides and thermoset, and, after the thermoforming, one of two closed surface skins of the plastic foam sheet (16) is perforated by means of needles (4) which are movably guided in vacuum channels (22) of the thermoforming unit (10).

2. Process according to Claim 1, **characterized in that** the side walls and the bottom of a product (20) formed from the plastic foam sheet (16) are each perforated perpendicularly with respect to the surfaces to the same/different depths.

3. Process according to Claim 2, **characterized in that** the needles (4) are extended from a female mould (13) by means of compressed air at the beginning of perforation and, at the end of perforation, after switching off the compressed air, the needles (4) are retracted into the female mould by means of spring pressure.

4. Process for perforating smooth, closed surfaces of extruded, open-cell plastic foam sheets, **characterized in that** the extruded plastic foam sheet (16) is heated up to a predetermined temperature, thermoformed in a thermoforming unit (10) with the aid of a vacuum on both sides and thermoset, and the thermoformed products (71) are transported out of the thermoforming unit (10) into a perforation station (90) and in the latter are pressed against a fixed pressure plate (70) by means of displaceable perforating blocks (73), and **in that** a needle plate (79) is raised in a freely suspended manner by means of a pressure medium against the perforating blocks (73) in order to press the needle tips of the needles (89) anchored in the needle plate (79) against the thermoformed products (71) and to pierce the surface of the latter bearing against the perforating blocks.

5. Process according to Claim 4, **characterized in that**, when raising the perforating blocks (73) until they are sealed tight with the thermoformed products (71), the perforating blocks (73) centre themselves in the thermoformed products (71) while they are suspended.

6. Process according to Claim 4, **characterized in that** the perforating blocks (73) are raised against the fixed pressure plate (70), with a lift which can be set, by means of electropneumatic or electromechanical drive cylinders (76).

7. Apparatus for perforating smooth, closed surfaces of products of open-cell plastic foam sheets, with a mould which is equipped with needles in matrix arrangement, whose needle tips project during a perforation operation from the surface of the mould to such an extent that they pierce the surface of the product, **characterized in that** needles (4) are movably arranged in vacuum channels (22) of a thermoforming unit (10) and **in that** with respect to a mould block (11) for the moulding of the inner side of the product there is a complementary mould block (9, 15).

8. Apparatus according to Claim 7, **characterized in that** the mould block (11) comprises a male mould (1), a cooling plate (2), a vacuum plate (3), movable needles (4), a needle plate (5), springs (6) for the return of the needle plate, diaphragms (7) and a mounting plate (8), which are held together by screws (30).

9. Apparatus according to Claim 8, **characterized in that** a mould block (9) for the outer side (12) of the plastic foam sheet (16) has a female mould (15), whose surface bearing against the outer side is designed to be complementary to the surface of the male mould (1) bearing against the inner side.

10. Apparatus according to Claim 7, **characterized in that** the mould blocks (9, 11) are movable toward each other to within a distance corresponding to the adjustable wall thickness of a tray (20) thermoformed from the plastic foam sheet (16).

11. Apparatus according to Claim 8, **characterized in that** there are in the mould block (11) the vacuum channels (22) for the movable needles (4) and **in that** the vacuum channels, which have a diameter greater than the needle diameter, extend from a chamber (23) on the underside of the vacuum plate (3) through the cooling plate (2) and the male mould (1) up to the outer side of the mould block (11).

12. Apparatus according to Claim 11, **characterized in that** the cross section of the vacuum channels (22) narrows to the cross section of the needles (4) over a length of a few tenths of a millimetre, beginning beneath the outer side and ending on the outer side of the mould block (11).

13. Apparatus according to Claim 11, **characterized in that** via the vacuum channels (22), vacuum can be applied to the inner side (13) of the plastic foam sheet (16) during thermoforming and **in that** at least some vacuum channels (22) are drilled open over a certain length to form cylinder chambers (24) which extend from the chamber (23) through the vacuum plate (3) up to partially into the cooling plate (2).

14. Apparatus according to Claim 13, **characterized in that** there are accommodated in the cylinder chambers (24) the springs (6) which enclose the needles (4) and **in that** the one end of each spring bears under pressure against the top surface of the associated cylinder chamber (24) and the other end bears under pressure against the associated needle plane (5).

15. Apparatus according to Claim 14, **characterized in that** the needle plates (5) respectively comprise two part-plates (25, 26) resting one on the other, of which the lower part-plate (26) rests on the diaphragm (7) and the upper part-plate (25) maintains a distance from a top surface (27) of the chamber (23) when pressure on the diaphragm is relieved and bears against the top surface (27) of the chamber (23) when the diaphragm is subjected to pressure.

16. Apparatus according to Claim 15, **characterized in that** the needless (4) are anchored by their lower ends in the upper part-plate (25) and **in that** holes (28) in the upper part-plate (25) have an oversize with respect to the led-through needles (4) in order to permit a frictionless backlash during the motions of the needles.

17. Apparatus according to Claim 8, **characterized in that** the individual diaphragm (7) is clamped between the mounting plate (8) and the vacuum plate (3), **in that** there is in the mounting plate (8) a channel (29), which is connected to a a central recess (31) beneath the centre of the diaphragm, and **in that** the underside of the diaphragm can be subjected to compressed air fed in via the channel and the recess.

18. Apparatus according to Claim 8, **characterized in that** the needles (4) have a needle tip (18) having an apex angle of 10° to 60°, in particular of 30°.

19. Apparatus according to Claim 18, **characterized in that** the needles (4) consist of an NiCr alloy and **in that** the needle tip (18) is nickel-plated.

20. Apparatus according to Claim 8, **characterized in that** there are 3×5 to 6×6 needle plates (5) and associated diaphragms (7) accommodated in a mould block (11).

21. Apparatus according to Claim 8, **characterized in that** the cooling plate (2) has on the underside cooling channels (32), which are closed off by the vacuum plate (3) and through which a cooling medium flows, and **in that** the vacuum plate (3) and the cooling plate (2) are made from aluminium.

22. Apparatus according to Claim 8, **characterized in that** the needle plates (5) consist of stainless steel and the diaphragms (7) consist of polyurethane.

23. Apparatus for perforating smooth, closed surfaces of products of open-cell plastic foam sheets, with a mould which is equipped with needles in matrix arrangement, whose needle tips project during a perforation operation from the surface of the mould to such an extent that they pierce the surface of the product, **characterized in that** the needles (52, 89) are movably arranged in bores (56, 93) in mould blocks (39, 78) which have perforating blocks (73), which bear as male moulds (47) against the inner sides of the products, and **in that** there are female moulds, designed to complement the perforating blocks (47), or a planar pressure plate (70), which respectively bear against the outer sides of the products.

24. Apparatus according to Claim 23, **characterized in that** the fixed mould block (39) which moulds the side walls (46) and the bottom (45) of a tray or of a container from a plastic foam sheet (16) has a fixed base plate (40) with mutually parallel channels (41, 42, 43) lying one above the other for a cooling medium, vacuum and a pressure medium and a male mound (47) in which there are needle pistons (51) which are directed perpendicularly onto the side walls (46) and the bottom (45) in their positions within the male mould lying opposite the side walls and the bottom.

25. Apparatus according to Claim 24, **characterized in that** there is provided on the underside of the male mould (47) a distributor channel (49), which is connected via at least one vertical bore (44) to the channel (43) for the pressure medium.

26. Apparatus according to Claim 24, **characterized in that** the channel (42) for the vacuum is in connection with cavities (61) in the interior of the male mould (47) via at least two vertical vacuum connection bores (50).

27. Apparatus according to Claims 24 arid 25, **characterized in that** the needle pistons (51) are in connection with the distributor channel (49), so that each needle piston can be subjected to compressed air.

28. Apparatus according to Claim 24, **characterized in that** the needle piston (51) comprises a T-shaped guide (54), a needle (52), a compression spring (53), a piston cylinder (59) and a piston ring (55).

29. Apparatus according to Claim 28, **characterized in that** the upper end of the piston cylinder (59) bears against a horizontal underside of the T-shaped guide (54) which is screwed into the block of the male mould, **in that** the needle (52) is surrounded by the compression spring (53) and is guided by its tip within a bore (56) of the guide (54), **in that** the end of the needle is anchored in the piston ring (55), and **in that** the lower end of the piston cylinder is supported against a collar (57) of a cavity in the male mould (47).

30. Apparatus according to Claim 29, **characterized in that** the compression spring (53) is supported by its ends on the one hand against the underside of the T-shaped guide and on the other hand against the piston ring (55).

31. Apparatus according to Claim 23, **characterized in that** the planar pressure plate (70) is mounted in fixed position on vertical guide rods (72) of a base frame (77) of a perforating station (90), and **in that** the mounting plate (75) on which a base plate (74) and the mould blocks (73) are fastened is displaceable along the guide rods (72).

32. Apparatus according to Claim 31, **characterized in that** there are arranged on the base frame (77) electropneumatic or electromechanical drive cylinders (76), whose piston rods (91) bear against the underside of the mounting plate (75) in order to raise or lower the latter.

33. Apparatus according to Claim 31, **characterized in that** the pressure plate (70) can be set in its height on the guide rods (72).

34. Apparatus according to Claim 31, **characterized in that** the plastic foam sheet thermoformed into products (71) bears against the underside of the pressure plate (70) such that the perforating blocks (73) centre themselves in the moulded products (71) directly before the perforation.

35. Apparatus according to Claim 31, **characterized in that** the base plate (74) has cylindrical holes (86, 88) which are arranged one above the other, have different diameters and are connected to one another via a shoulder (87), **in that** there are arranged in the holes guiders/spacers (82), which are connected to the perforating blocks (73) via fastening screws (83), the outline of the guiders/spacers (82) being the same as the outline of the cylindrical holes (86, 88), and the guiders/spacers (82) being led through a needle plate (79) and bearing flush against the underside of the perforating blocks (73).

36. Apparatus according to Claim 35, **characterized in that** the needle plate (79), in which the needles (89) are anchored, is arranged between the base plate (74) and the perforating blocks (73) in a pressure medium chamber (85) with a backlash equal to the depth of perforation of the needles (89) penetrating into the moulded products (71).

37. Apparatus according to Claim 36, **characterized in that** a number of compression springs (81) are accommodated in blind holes in the perforating blocks (73), the one end of each compression spring (81) being supported against a depression in the upper side of the needle plate (79) and the other end of each compression spring being supported against the terminating surface of the corresponding blind hole.

38. Apparatus according to Claim 36, **characterized in that** there is in the base plate (74) a channel (84) for a pressure medium, which is in connection with a pressure source and, via vertical bores, with the pressure medium chamber (85).

## Revendications

1. Procédé pour perforer des surfaces lisses fermées de feuilles en mousse de matière plastique extrudées et à cellules ouvertes, **caractérisé en ce que** la feuille en mousse de matière plastique (16) extrudée est chauffée à une température prédéfinie , thermoformée et thermofixée dans une installation de thermoformage (10) à l'aide d'un vide double face, et **en ce qu'**une de deux couches superficielles fermées de la feuille en mousse de matière plastique (16), après le thermoformage, est perforée au moyen d'aiguilles (4) qui sont conduites de façon mobile dans des conduits à vide (22) de l'installation de thermoformage (10).

2. Procédé selon la revendication 1, **caractérisé en ce que** les parois latérales et le fond d'un produit (20) formé dans une feuille en la mousse de matière plastique (16) sont semblablement/différemment perforés profondément de manière respectivement verticale aux surfaces.

3. Procédé selon la revendication 2, **caractérisé en ce que** les aiguilles (4) sont sorties d'une matrice (13) au moyen d'air comprimé au début de la perforation, et **en ce que** les aiguilles (4) sont rentrées dans la matrice au moyen d'une pression de ressort à la fin de la perforation après l'arrêt de l'air comprimé.

4. Procédé pour perforer des surfaces lisses fermées de feuilles en mousse de matière plastique extrudées et à cellules ouvertes, **caractérisé en ce que** la feuille en mousse de matière plastique (16) extrudée est chauffée à une température prédéfinie, thermoformée et thermofixée dans une installation de thermoformage (10) à l'aide d'un vide double face et **en ce que** les produits thermoformés (71) sont transportés de l'installation de thermoformage (10) à une station de perforation (90) et pressés dans celle-ci contre une plaque de pression rigide (70) au moyen de blocs de perforation (73) mobiles, et **en ce qu'**une plaque d'aiguilles (79) est soulevée en étant suspendue librement au moyen d'un milieu de pression contre les blocs de perforation (73), pour presser les pointes d'aiguille des aiguilles (89) fixées dans la plaque d'aiguille (79) contre les produits thermoformés (71) et pour perforer leur surface adjacente aux blocs de perforation.

5. Procédé selon la revendication 4, **caractérisé en ce que** lors du soulèvement des blocs de perforation (73) jusqu'à la fermeture étanche avec les produits thermoformés (71), les blocs de perforation (73) se centrent eux-mêmes dans les produits thermoformés (71) pendant la suspension.

6. Procédé selon la revendication 4, **caractérisé en ce que** les blocs de perforation (73) sont soulevés avec une élévation réglable au moyen de vérins d'injection (76) électropneumatiques ou électromécaniques contre la plaque de pression rigide (70).

7. Dispositif pour perforer des surfaces lisses fermées de produits en feuilles en mousse de matière plastique à cellules ouvertes, comprenant un outil qui est équipé d'aiguilles dans l'agencement de la matrice, dont les pointes d'aiguille dépassent si loin de la surface de l'outil pendant un processus de perforation, qu'elles perforent la surface du produit, **caractérisé en ce que** des aiguilles (4) sont disposées de manière mobile dans des conduits à vide (22) d'une installation de thermoformage (10) et **en ce qu'**un bloc de moulage complémentaire (9, 15) est présent en plus d'un bloc de moulage (11) pour le modelage du côté intérieur du produit.

8. Dispositif selon la revendication 7, **caractérisé en ce que** le bloc de moulage (11) comprend un poinçon (1), une plaque de refroidissement (2), une plaque de vide (3), des aiguilles mobiles (4), une plaque d'aiguilles (5), des ressorts (6) pour le relèvement des plaques d'aiguille, des membranes (7) et une plaque de montage (8), qui sont maintenus ensemble par des vis (30).

9. Dispositif selon la revendication 8, **caractérisé en ce qu'**un bloc de moulage (9) comprend pour le côté extérieur (12) de la feuille en mousse de matière plastique (16) une matrice (15), dont la surface adjacente au côté extérieur est complémentaire à la surface du poinçon (1) adjacente au côté intérieur.

10. Dispositif selon la revendication 7, **caractérisé en ce que** les blocs de moulage (9, 11) sont destinés à pouvoir être déplacés les uns sur les autres jusqu'à un écart, en fonction de l'épaisseur de paroi réglable d'une enveloppe (20) thermoformée en une feuille en mousse de matière plastique (16).

11. Dispositif selon la revendication 8, **caractérisé en ce que** les conduits à vide (22) sont présents pour les aiguilles mobiles (4) dans le bloc de moulage (11) et **en ce que** les conduits à vide, qui présentent un diamètre supérieur au diamètre des aiguilles, s'étendent d'une chambre (23) sur le côté inférieur de la plaque de vide (3) par la plaque de refroidissement (2) et le poinçon (1) jusqu'au côté extérieur du bloc de moulage (11).

12. Dispositif selon la revendication 11, **caractérisé en ce que** la section transversale des conduits à vide (22) se rétrécit sur une longueur de quelques dixièmes de millimètres, débutant au-dessous du côté extérieur et finissant sur le côté extérieur du bloc de moulage (11), sur la section transversale des aiguilles (4).

13. Dispositif selon la revendication 11, **caractérisé en ce qu'**un vide peut être établi par les conduits à vide (22) sur le côté intérieur (13) de la feuille en mousse de matière plastique (16) lors du thermoformage, et **en ce qu'**au moins quelques conduits à vide (22) sont alésés sur une longueur déterminée en formant des chambres de cylindre (24), qui s'étendent en traversant de la chambre (23) par la plaque de vide (3) jusqu'à en partie la plaque de refroidissement (2).

14. Dispositif selon la revendication 13, **caractérisée en ce que** les ressorts (6) qui entourent les aiguilles (4), sont introduits dans les chambres de cylindre (24), et **en ce qu'**une extrémité de chaque ressort s'appuie contre la surface de recouvrement de la chambre de cylindre (24) correspondante et **en ce que** l'autre extrémité s'applique contre la plaque d'aiguille (5) correspondante.

15. Dispositif selon la revendication 14, **caractérisé en ce que** les plaques d'aiguille (5) se composent respectivement de deux plaques partielles (25, 26) reposant l'une sur l'autre, desquelles la plaque partielle inférieure (26) repose sur la membrane (7) et la plaque partielle supérieure (25), lors de la décompression de la membrane, présente un écart par rapport à une surface de recouvrement (27) de la chambre (23) et prend appui contre la surface de recouvrement (27) de la chambre (23) lors de la pressurisation de la membrane.

16. Dispositif selon la revendication 15, **caractérisé en ce que** les aiguilles (4) sont fixées à leurs extrémités inférieures dans la plaque partielle supérieure (25) et **en ce que** des trous (28) possèdent dans la plaque partielle supérieure (25) une surmesure face aux aiguilles (4) passées à travers, pour permettre un jeu sans frottement pendant les mouvements des aiguilles.

17. Dispositif selon la revendication 8, **caractérisé en ce que** la membrane individuelle (7) est serrée entre la plaque de montage (8) et la plaque de vide (3), **en ce qu'**un canal (29), présent dans la plaque de montage (8), est relié à un évidement (31) central au-dessous du milieu de la membrane, et **en ce que** le côté inférieur de la membrane peut être alimenté par l'air comprimé amené par le canal et l'évidement.

18. Dispositif selon la revendication 8, **caractérisé en ce que** les aiguilles (4) comportent une pointe d'aiguille (18) ayant un angle d'ouverture de 10° à 60°, en particulier de 30°.

19. Dispositif selon la revendication 18, **caractérisé en ce que** les aiguilles (4) se composent d'un alliage nickel-chrome et **en ce que** la pointe d'aiguille (18) est nickelée.

20. Dispositif selon la revendication 8, **caractérisé en ce que** des plaques d'aiguille (5) 3x5 à 6x6 et des membranes (7) en faisant partie sont disposées dans un bloc de moulage (11).

21. Dispositif selon la revendication 8, **caractérisé en ce que** la plaque de refroidissement (2) comprend sur le côté inférieur des canaux de refroidissement (32), qui sont fermés par la plaque de vide (3) et par lesquelles s'écoule un milieu de refroidissement, et **en ce que** les plaques de vide (3) et de refroidissement (2) sont fabriquées en aluminium.

22. Dispositif selon la revendication 8, **caractérisé en ce que** les plaques d'aiguille (5) se composent d'acier inoxydable et les membranes (7) de polyuréthane.

23. Dispositif pour perforer des surfaces lisses fermées de produits en feuilles en mousse de matière plastique à cellules ouvertes, comprenant un outil qui est équipé d'aiguilles dans l'agencement de la matrice, dont les pointes d'aiguille dépassent si loin de la surface de l'outil pendant un processus de perforation, qu'elles perforent la surface du produit, **caractérisé en ce que** les aiguilles (52, 89) sont disposées de manière mobile dans des forures (56, 93) dans des blocs de moulage (39, 78), qui comprennent des blocs de perforation (73), qui s'appliquent, en tant que poinçons (47), aux côtés intérieurs des produits, et **en ce que** des matrices, complémentaires aux blocs de perforation (47) ou une plaque de pression plate (70) sont présents, et s'appliquent respectivement aux côtés extérieurs des produits.

24. Dispositif selon la revendication 23, **caractérisé en ce que** le bloc de moulage rigide (39), qui forme les parois latérales (46) et le fond (45) d'une enveloppe ou d'un récipient en feuille en mousse de matière plastique (16), comprend une plaque de base rigide (40), ayant des canaux (41, 42, 43) parallèles les uns aux autres et reposant les uns sur les autres pour un milieu de refroidissement, un vide et un milieu de pression et un poinçon (47), dans lequel des pistons d'aiguille (51) sont présents, qui sont orientés verticalement sur les parois latérales (46) et le fond (45) dans leurs positions opposées aux parois latérales et au fond, à l'intérieur du poinçon.

25. Dispositif selon la revendication 24, **caractérisé en ce qu'**un canal distributeur (49) est mis en place sur le côté inférieur du poinçon (47), et est relié au canal (43) par l'intermédiaire d'au moins une forure verticale (44) pour le milieu de pression.

26. Dispositif selon la revendication 24, **caractérisé en ce que** le canal (42) est relié à des espaces creux (61) à l'intérieur du poinçon (47) pour le vide par l'intermédiaire d'au moins deux forures de liaison de vide verticales (50).

27. Dispositif selon les revendications 24 et 25, **caractérisé en ce que** les pistons d'aiguille (51) sont reliés au canal distributeur (49), de sorte que chaque piston d'aiguille puisse être alimenté par l'air comprimé.

28. Dispositif selon la revendication 24, **caractérisé en ce que** le piston d'aiguille (51) se compose d'un guidage (54) en forme de T, d'une aiguille (52), d'un ressort de pression (53), d'un cylindre de piston (59) et d'un, segment de piston (55).

29. Dispositif selon la revendication 28, **caractérisé en ce que** l'extrémité supérieure du cylindre de piston (59) est collée contre un côté inférieur horizontal du guidage (54) en forme de T, qui est vissé dans le bloc du poinçon, **en ce que** l'aiguille (52) est entourée par le ressort de pression (53) et est guidée avec sa pointe à l'intérieur d'une forure (56) du guidage (54), **en ce que** l'extrémité de l'aiguille est fixée dans le segment de piston (55), et **en ce que** l'extrémité inférieure du cylindre de piston s'appuie contre un collet de butée (57) d'un espace creux (60) dans le poinçon (47).

30. Dispositif selon la revendication 29, **caractérisé en ce que** le ressont de pression (53) s'appuie avec ses extrémités d'une part contre le côté inférieur du guidage en forme de T et d'autre part contre le segment de piston (55).

31. Dispositif selon la revendication 23, **caractérisé en ce que** la plaque de pression plate (70) est montée de manière stable sur des tiges directrices verticales (72) d'un support de base (77) d'une station de perforation (90), et **en ce que** la plaque de montage (75), sur laquelle sont fixés une plaque de base (74) et les blocs de moulage (73), est mobile le long des tiges directrices (72).

32. Dispositif selon la revendication 31, **caractérisé en ce que** sont disposés sur le support de base (77) des vérins d'entraînement (76) électropneumatiques ou électromécaniques, dont les tiges de piston (91) sont collées contre le côté inférieur de la plaque de montage (75), pour soulever ou baisser celle-ci.

33. Dispositif selon la revendication 31, **caractérisé en ce que** la plaque de pression (70) est réglable dans sa hauteur sur les tiges directrices (72).

34. Dispositif selon la revendication 31, **caractérisé en ce que** la feuille en mousse de matière plastique thermoformée pour des produits (71) est collée contre le côté inférieur de la plaque de pression (70), de sorte que les blocs de perforation (73) se centrent immédiatement avant la perforation dans les produits démoulés (71).

35. Dispositif selon la revendication 31, **caractérisé en ce que** la plaque de base (74) comprend des trous cylindriques (86, 88) disposés les uns sur les autres, ayant différents diamètres, qui sont reliés les uns aux autres par un épaulement (87), **en ce que** des supports d'écart/de guidage (82), qui sont reliés aux blocs de perforation (73) par l'intermédiaire de vis de fixation (83), sont disposés dans les trous, le contour des supports d'écart/de guidage (82) étant égal au contour des trous cylindriques (86, 88) et les supports d'écart/de guidage (82) sont traversés par une plaque d'aiguille (79) et sont adjacents au côté inférieur des blocs de perforation (73).

36. Dispositif selon la revendication 35, **caractérisé en ce que** la plaque d'aiguille (79), dans laquelle sont fixées les aiguilles (89), est disposée entre la plaque de base (74) et les blocs de perforation (73) dans une chambre de milieu de pression (85) comprenant un jeu égal aux profondeurs de perforation des aiguilles (89) pénétrant dans les produits formés (71).

37. Dispositif selon la revendication 36, **caractérisé en ce qu'**un nombre de ressorts de pression (81) est introduit dans les logements à fond plein dans les blocs de perforation (73), l'une des extrémités de chaque ressort de pression (81) s'appuyant contre un estampage dans le côté supérieur de la plaque d'aiguille (79) et l'autre extrémité de chaque ressort de pression contre la surface de fermeture du logement à fond plein correspondant.

38. Dispositif selon la revendication 36, **caractérisé en ce qu'**un canal (84), qui est relié à une source de pression et à la chambre de pression (85) par l'intermédiaire de forures verticales, est présent pour un milieu de pression dans la plaque de base (74).
